# DEMANDE DE BREVET EUROPEEN

(11) **EP 0 995 983 A1**
(43) Date de publication de la demande: **26.04.2000**
(21) Numéro de dépôt: 99402604.5
(22) Date de dépôt: 21.10.1999
(51) Int. Cl.: G01N 21/39

(54) **Système de détection et de mesure d'un ou de plusieurs gaz d'un mélange gazeux**

(30) Priorité: 23.10.1998 FR 9813305
(71) Demandeur: AEROSPATIALE MATRA, 75781 Paris Cédex 16 (FR)
(72) Inventeur: Boucher, Daniel, 59650 Villeneuve D'Ascq (FR); Charruyer, Philippe, 18000 Bourges (FR); Legrand, Alain, 18000 Bourges (FR); Michelet, Karine, 78960 Voisins le Bretonneux (FR)
(74) Mandataire: Poulin, Gérard

(57) **Abrégé**

L'invention concerne un système de détection et de mesure (temps réel et portable) d'un gaz ou de plusieurs gaz d'un mélange gazeux comportant des moyens optiques (1) positionnés dans le milieu gazeux à analyser et commandés par un ordinateur PC (2), ces moyens optiques comprenant :
- au moins une première et une seconde diodes laser à cavités accordables (10a, 10b), émettant des faisceaux lumineux ayant, respectivement, une première et une seconde longueurs d'ondes (λ1, λ2) ;
- un prisme (16) mélangeur de faisceaux lumineux ;
- un cristal biréfringent (18) monté sur une table d'orientation (19) ; et
- un détecteur de rayonnements infrarouges (23).

Application à tous les domaines de l'industrie générant des gaz notamment toxiques, dangereux ou polluants.

## Description

### Domaine de l'invention

L'invention concerne un système de détection et de mesure (temps réel et portable), par spectrométrie d'absorption, d'un ou de plusieurs gaz d'un mélange gazeux et, notamment, des gaz de l'atmosphère.

L'invention trouve des applications dans de nombreux domaines de l'industrie et, notamment, dans les industries génératrices de déchets gazeux dans l'atmosphère, telles que les raffineries et les centrales thermiques, pour connaître la concentration d'un ou de plusieurs gaz toxiques ou dangereux, ou encore dans les industries de transformation de matières premières, telles que les industries chimiques et pharmaceutiques, pour contrôler l'atmosphère dans laquelle travaillent leurs employés. Elle trouve également des applications dans le domaine de la surveillance atmosphérique pour déterminer le taux des gaz polluants dans l'atmosphère.

### Etat de la technique

Le principe de la mesure d'un gaz dans l'atmosphère par une technique de spectrométrie d'absorption est connu de l'homme du métier. Cette technique consiste à déterminer l'absorption d'une zone de l'atmosphère. Pour cela, la zone d'atmosphère à analyser est éclairée par une source de lumière ; la lumière traverse donc cette zone d'atmosphère. Le signal lumineux obtenu après avoir traversé cette zone d'atmosphère est récupéré et quantifié sur un détecteur, afin d'obtenir une information sur la quantité de lumière transmise et, par conséquent, sur la quantité de lumière absorbée par la zone d'atmosphère. On détermine alors le spectre d'absorption du gaz mesuré. Or, le gaz que l'on cherche à mesurer est généralement un gaz connu. Et les gaz connus sont caractérisés, d'un point de vue spectroscopique, par leur spectre d'absorption. Ainsi, par comparaison du spectre d'absorption déterminé lors de la mesure avec les spectres connus, on reconnaît le gaz présent dans la zone d'atmosphère analysée.

De nombreux documents décrivent des procédés et des dispositifs de détection de gaz dans l'atmosphère. La plupart de ces dispositifs utilisent une source laser émettant à une longueur d'onde précise. Parmi ces documents, on peut citer les demandes de brevets français numéros FR-A-2 389 888 ou FR-A-2 388 261 ou bien FR-A-2 171 519 ou encore FR-A-2 256 407 ; on peut aussi citer la demande de brevet français FR-A-2 747 192. Cependant, ces dispositifs présentent l'inconvénient de permettre la mesure d'un seul gaz choisi à l'origine, le choix de la source laser et de la longueur d'onde que doit émettre cette source laser étant directement lié au gaz à détecter.

Il existe, par ailleurs, un dispositif permettant d'émettre des longueurs d'ondes impossibles à émettre par des sources lasers classiques. Ce dispositif fonctionne sur le principe de la différence de fréquences ; il est décrit dans les publications suivantes : « Midinfrared cw difference-frequency generation using a synchronous scanning technique for continous tuning of the full spectral region from 4.7 to 6.5 µm », de W. CHEN, J. BURIE et D. BOUCHER, Rev. Sci. Instrum. Vol 67, n° 10, Octobre 1996 ; « A Novel cw optical Laser-based Difference-frequency infrared Spectrometer », de D. BOUCHER, W. CHEN, J. BURIE et P. PEZE, Sème colloque sur les Lasers et l'optique quantitative, 8-10 septembre 1997, Strasbourg. Ce dispositif comporte deux lasers titane-saphir (TiSa) qui génèrent un rayonnement lumineux infrarouge obtenu par la différence de deux rayonnements lumineux émis initialement par les deux lasers ; la différence des deux rayonnements initiaux est obtenue grâce à un cristal biréfringent. En faisant varier cette différence, on obtient des longueurs d'ondes différentes, ce qui permet de détecter plusieurs gaz. Cependant, ce dispositif nécessite l'utilisation de deux lasers ; il présente donc un volume important : il occupe une surface de plusieurs mètres carrés et son poids dépasse la tonne. Un tel dispositif est donc difficilement déplaçable et ne peut être utilisé localement, dans l'atmosphère ambiante à analyser.

### Exposé de l'invention

L'invention a justement pour but de remédier à ces inconvénients. A cette fin, elle propose un système de détection optique et de mesure quantitative d'un ou de plusieurs gaz d'un mélange gazeux, tels que les gaz contenus dans l'atmosphère. Ce système est de taille réduite et peut être aisément déplacé de façon à permettre des analyses de gaz locales, dans des espaces confinés ou semi-ouvert, au sein même du mélange gazeux à analyser.

De façon plus précise, l'invention concerne un système de détection et de mesure d'un gaz ou de plusieurs gaz constituant un mélange gazeux, comportant :
- des moyens optiques de détermination du spectre d'absorption du gaz à mesurer ;
- des moyens de mémorisation de données relatives à différents gaz et de traitement des informations issues des moyens optiques ; et
- des moyens d'alimentation électrique des moyens optiques,
caractérisé en ce que les moyens optiques sont positionnés au sein du milieu gazeux à analyser et qu'ils comportent :
- au moins une première et une seconde diodes laser à cavités accordables, émettant des faisceaux lumineux ayant, respectivement, une première et une seconde longueurs d'ondes ;
- un prisme mélangeur de faisceaux lumineux ;
- un cristal biréfringent monté sur une table d'orientation et assurant la formation d'un faisceau lumineux infrarouge ayant pour longueur d'onde, la résultante de la différence des première et seconde longueurs d'ondes (en respectant les conditions d'accord de phase) ; et
- un détecteur de rayonnements infrarouges.

Avantageusement, les moyens optiques comportent une cellule multipassage assurant plusieurs passages du faisceau lumineux dans le milieu gazeux à analyser, pour augmenter la sensibilité de la mesure.

Les moyens optiques peuvent comporter un filtre assurant uniquement le passage des rayons infrarouges.

Selon un mode de réalisation de l'invention, le système comprend des moyens de contrôle et de compensation de la température, permettant de maintenir les diodes laser à une température constante.

Selon une variante de l'invention, les moyens optiques et les moyens de mémorisation et de traitement sont reliés par voie hertzienne, ou par fibre optique.

Les moyens d'alimentation électrique du dispositif peuvent consister en une batterie, de façon à rendre le système autonome.

Selon un mode de réalisation particulier de l'invention, le cristal biréfringent est, par exemple, un cristal de sélénide de gallium.

Le système de l'invention peut être associé en réseau à un ou plusieurs autres systèmes identiques.

### Brève description des figures

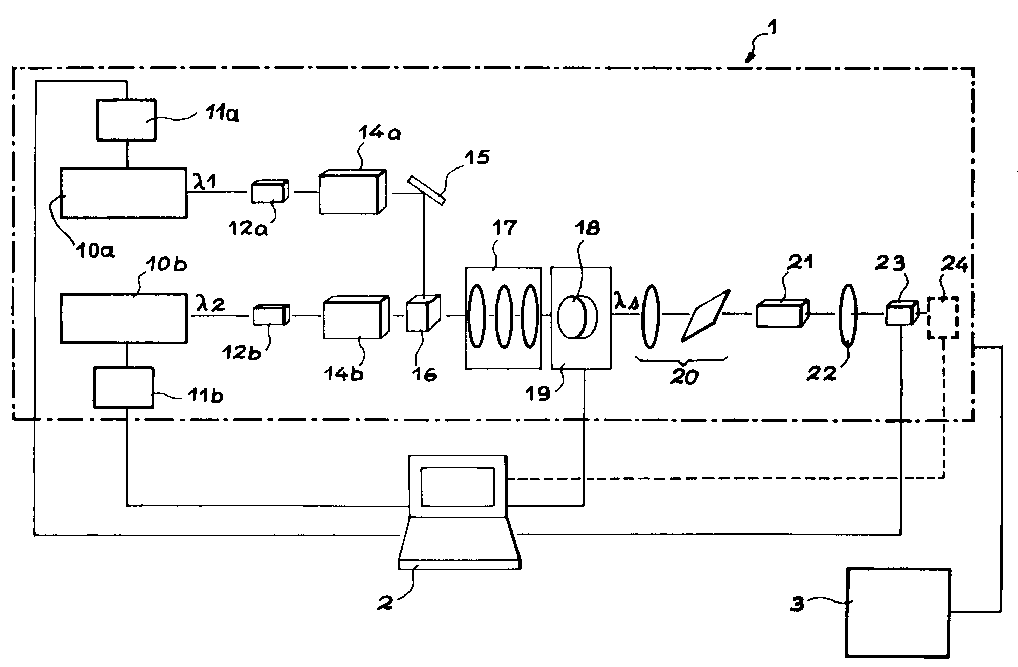

La figure unique représente, schématiquement, les différents éléments constituant le système spectroscopique à différence de fréquences de l'invention, avec ses moyens optiques, ses moyens de mémorisation et de traitement et ses moyens d'alimentation.

### Description détaillée de modes de réalisation de l'invention

L'invention concerne un système de détection et d'analyse spectroscopique d'un ou de plusieurs gaz d'un mélange gazeux tel que l'atmosphère. D'une façon générale, ce système permet de déterminer et de mesurer toutes molécules sous forme gazeuse, qui possède un spectre d'absorption dans le domaine infrarouge.

Ce système a donc pour but d'analyser quantitativement et qualitativement, en temps réel, plusieurs gaz de l'atmosphère dans son propre volume, réduit.

Pour cela, le système génère, de façon continue, un rayonnement lumineux infrarouge dans un large domaine spectral, par différence de fréquences au moyen de deux diodes laser à cavités accordables et d'un cristal biréfringent. Ce système permet ainsi de générer des longueurs d'ondes impossibles à obtenir avec les dispositifs classiques, d'où la détection de nombreux gaz, successivement ou simultanément.

Plus précisément, le système de l'invention comporte des moyens optiques assurant la détermination du spectre d'absorption du (ou des) gaz à analyser, des moyens de mémorisation des données relatives à différents gaz connus et de traitement des informations obtenues des moyens optiques, appelés plus simplement moyens de traitement, et des moyens d'alimentation électrique de l'ensemble du système.

Les moyens optiques comportent au moins deux diodes laser à cavités accordables, qui émettent chacune un faisceau lumineux ayant, respectivement, une première longueur d'onde λ1 dite « signal » et une seconde longueur d'onde λ2 dite « pompe ».

Le procédé et les moyens de commande de la fréquence et de la puissance de sortie de telles diodes laser à cavités accordables sont décrits, notamment dans le brevet français FR-A-2 689 696.

Ces deux longueurs d'ondes λ1 et λ2 sont ensuite « mélangées » grâce à un cristal biréfringent afin d'obtenir une longueur d'onde λs, différente de λ1 et λ2. L'utilisation d'un cristal biréfringent pour effectuer la différence de fréquences s'explique par le fait que, dans un cristal biréfringent, les indices de réfraction dépendent des directions de propagation et de la polarisation des ondes incidentes, d'où le caractère non linéaire de la différence de fréquences.

L'association de deux diodes à cavités accordables et d'un cristal biréfringent permet de balayer un intervalle spectral prédéfini dans le domaine 2 - 20 µm qui peut être, par exemple, compris entre 8 et 12 µm. La valeur de cet intervalle spectral dépend des valeurs des longueurs d'ondes λ1 et λ2, du type de cristal utilisé et de son orientation. La longueur d'onde λs peut ainsi prendre toutes les valeurs de l'intervalle spectral défini par les diodes laser et le cristal et, en particulier, des valeurs qui ne peuvent être obtenues par aucun dispositif du marché. La fenêtre spectrale ainsi créee permet un réglage automatique et continu de la longueur d'onde λs en fonction des gaz à analyser.

Selon un exemple du système de l'invention, on peut choisir comme diodes laser, la diode laser à cavité externe référencée DL 200/857 nm et la diode laser DL 20/941 nm, toutes deux fabriquées par la Société OPTON LASER INTERNATIONAL®, ces deux diodes étant de même technologie mais ayant un accord central différent. Lorsque l'on associe à cette paire de diodes laser, un cristal de sélénide de gallium (GaSe), on crée une fenêtre spectrale de 8 à 12 µm.

Selon un autre exemple du système de l'invention, on peut associer, à la même paire de diodes laser, un cristal AgGaSe₂, qui permet d'obtenir une fenêtre spectrale légèrement supérieure.

Dans l'exemple qui a été donné précédemment, les diodes laser et le cristal biréfringent sont choisis de façon à permettre la détection de gaz ayant leur raie d'absorption dans l'intervalle 8 - 12 µm, beaucoup de gaz polluants ayant leur raie d'absorption dans cet intervalle.

En effet, parmi ces gaz, on trouve, l'acide formique HCOOH, le dioxyde de carbone CO₂, le méthane CH₄, l'acide sulfurique H₂S, l'ammoniaque NH₃, le dioxyde d'azote NO₂, le protoxyde d'azote N₂O, l'ozone O₃, l'eau H₂O, l'éthane C₂H₆, l'acétylène C₂H₂, l'éthylène C₂H₄, le propane C₃H₈, le chlorure de méthyle CH₃CI, le propylène C₃H₆, le méthanol CH₄O, le benzène C₆H₆, le toluène C₇H₈, le fréon 114 C₂Cl₂F₄, le tétrachlorométhane CCl₄, le fréon 11 CCl₃F, le fréon 12 CCI₂F₂, le florure de soufre SF₆, etc.

Cependant, il est tout à fait possible de déterminer et de quantifier des gaz dont la raie d'absorption n'appartient pas à ce domaine de 8 - 12 µm ; pour cela, il suffit de choisir des diodes laser accordables à des fréquences différentes et de choisir un autre cristal biréfringent plus approprié ; en réajustant les paramètres de réglage de l'ensemble du système, on obtient l'accord de phase pour une autre fenêtre spectrale.

Dans toute la description qui précède, on a décrit un mode de réalisation dans lequel le système comporte deux diodes laser. Toutefois, pour obtenir un balayage de longueurs d'ondes plus large, c'est-à-dire une fenêtre spectrale plus importante, le système peut comporter une diode laser à fréquence fixe et une pluralité de diodes laser accordables. Cette variante présente l'avantage supplémentaire de permettre une modification rapide de la gamme de fréquences possible.

Comme on l'a dit précédemment, le rôle du cristal biréfringent est de permettre le mélange des deux longueurs d'ondes (ou fréquences) émises par les diodes laser. Pour cela, ce cristal biréfringent est monté sur une platine, ou table d'orientation, commandée par les moyens de traitement, qui seront décrits plus en détail par la suite. L'orientation du cristal selon un angle de rotation d'environ ± 10° permet de modifier la proportion de mélange entre les deux longueurs d'ondes λ1 et λ2. L'accord de phase s'obtient par le réglage des deux diodes et l'orientation de la platine support du cristal.

En pratique, le réglage de l'orientation des diodes lasers peut se faire selon une, deux ou trois directions, selon le mode de réalisation choisi. De même, l'orientation de la table d'orientation 19 peut se faire suivant un, deux ou trois axes. D'autre part, le réglage du paramétrage des diodes peut s'effectuer sur trois ou quatre données, en fonction du mode de réalisation.

Sur la figure, on a représenté schématiquement le mode de réalisation préféré du système de l'invention avec ses moyens optiques et électrooptiques référencés 1, ses moyens de mémorisation et de traitement, référencés 2, et ses moyens d'alimentation électrique, référencés 3.

Les moyens optiques 1 comportent les deux diodes laser à cavités externes 10a et 10b qui émettent chacune un faisceau lumineux de longueurs d'ondes respectives λ1 et λ2. La diode 10b est montée de telle façon que le faisceau issu de celle-ci soit polarisé à 90° par rapport à celui de la diode 10a.

Selon le mode de réalisation représenté sur la figure, les deux faisceaux lumineux sont introduits chacun dans un isolateur de Faraday, référencés respectivement 12a et 12b. Ces isolateurs de Faraday 12a et 12b sont des dispositifs dont le rôle est d'empêcher toute rétrodiffusion sur les diodes.

Ensuite, chacun des faisceaux lumineux issus, des isolateurs de Faraday 12a et 12b, est introduit dans un prisme anamorphique, respectivement 14a et 14b. Ces prismes anamorphiques 14a et 14b ont pour rôle de rendre les faisceaux lumineux issus des diodes, cylindriques et de faciliter leur focalisation dans le cristal biréfringent.

Les faisceaux lumineux obtenus en sortie de ces prismes anamorphiques 14a et 14b traversent ensuite un cube polarisateur, référencé 16. Le rôle de ce cube polarisateur 16 est d'assembler les deux faisceaux pour qu'ils suivent, ensuite, le même chemin optique en respectant leur polarisation. L'un des faisceaux peut, par exemple, traverser directement le cube polarisateur ; l'autre faisceau, dirigé vers le cube par l'intermédiaire d'un réflecteur 15, de type miroir, peut être réfléchi selon un angle de 90° par le cube polarisateur 16. En d'autres termes, le cube polarisateur 16 est un aiguilleur qui dirige chacun des deux faisceaux vers le cristal biréfringent 18 de façon colinéaire.

Entre le cristal biréfringent 18 et le cube polarisateur 16, un télescope 17 peut être introduit pour assurer la focalisation du faisceau lumineux issu du cube polarisateur sur le cristal 18.

Comme expliqué précédemment, le cristal biréfringent 18 monté sur une table d'orientation 19 assure, ensuite, le mélange des longueurs d'ondes λ1 et λ2, de façon à obtenir, à sa sortie, un faisceau de longueur d'onde λs. Ce « mélange » peut être modifié en changeant à la fois les paramètres de commande des deux diodes 10a et 10b et l'orientation du cristal 18 par l'intermédiaire de la table d'orientation 19.

Selon un mode de réalisation de l'invention, un filtre Ge, référencé 20, est placé en sortie de ce cristal biréfringent 18. Le rôle de ce filtre 20 est de ne laisser passer que les rayonnements infrarouges de façon à faciliter la détection du spectre d'absorption du gaz à analyser. En sortie de ce filtre 20, une cellule multipassage 21, assure un passage multiple du faisceau lumineux dans la zone de mélange gazeux à analyser. Cette cellule multipassage peut être, par exemple, une cellule de white ; celle-ci consiste en une sorte de cylindre dont les extrémités sont fermées par deux hémisphères qui assurent plusieurs réflexions successives du faisceau lumineux de façon à prolonger le passage du faisceau lumineux dans la zone de mélange gazeux à analyser. Cette cellule multipassage 21 permet ainsi d'améliorer la sensibilité du système.

En sortie de cette cellule de white 21, une lentille 22 assure la convergence du faisceau lumineux vers le détecteur infrarouge 23. C'est ce détecteur infrarouge 23 qui permet de déterminer le spectre d'absorption du gaz à analyser à partir du faisceau lumineux reçu. Ce détecteur infrarouge peut être un détecteur HgCdTe tout à fait classique ; il ne sera donc pas décrit de façon plus précise.

Les données relatives au spectre d'absorption détecté sont envoyées aux moyens de traitement 2 qui effectuent alors les traitements nécessaires pour déterminer la nature du gaz et calculer la concentration de ce gaz.

Les paramètres sont les courants d'alimentation des diodes, leur température, la position du réseau d'accord (miroir mû en translation de façon à modifier la longueur de la cavité, ce qui entraîne une modification de la longueur d'onde) et l'orientation du faisceau. La maîtrise de ces paramètres permet de générer des rayonnements monomodes de longueurs d'ondes λ1 et λ2 en concordance avec la valeur de l'angle d'orientation du cristal 18 pour obtenir le faisceau infrarouge désiré. Les moyens 11a et 11b sont implémentés sur des cartes électroniques qui peuvent être intégrées dans les moyens de mémorisation et de traitement 2.

Selon le mode de réalisation, représenté en traits pleins sur la figure, le système fonctionne en boucle ouverte, c'est-à-dire sans mesure et sans asservissement de la fréquence recueillie par le détecteur infrarouge 23, ce qui consiste à supposer que les fréquences des faisceaux issus des deux diodes sont bien celles prévues pour les paramètres d'accord des cavités.

Selon un autre mode de réalisation de l'invention, des moyens 24 de mesure de la fréquence recueillie par le détecteur infrarouge 23 peuvent être introduits, en sortie du détecteur infrarouge. Ces moyens 24 de mesure de la fréquence, représentés en pointillés sur la figure, sont connectés aux moyens de traitement 2 qui déterminent tout écart éventuel et qui modifient l'accord des diodes pour corriger cet écart.

Les moyens de mémorisation et de traitement 2 peuvent être simplement un ordinateur de type PC muni d'une base de données et d'un logiciel d'exploitation des mesures qui fournit, en temps réel, les mesures relatives à la présence et au taux du gaz recherché.

La base de données, comporte toutes les informations connues relatives à tous les gaz connus et, en particulier, des informations relatives aux raies d'absorption de chacune des molécules gazeuses pouvant être analysées par le système.

Avantageusement, cette base de données peut être mise à jour régulièrement dès que de nouvelles molécules gazeuses, ou gaz, sont découvert(e)s ou fabriqué(e)s. Cette base de donnée est par exemple la base commercialisée par la Société HITRAN®.

En pratique, l'opérateur cherche à détecter et à quantifier un ou plusieurs gaz précis dont les raies d'absorption sont connues et répertoriées dans la base de données spectroscopiques contenue dans l'ordinateur. Les longueurs d'ondes de ces raies correspondent aux longueurs d'ondes infrarouges que le système va devoir générer. Par conséquent, l'opérateur a, uniquement, à entrer dans le PC la nature du gaz recherché ; le choix des fréquences F1 et F2 des diodes laser 10a et 10b et, par conséquent, des longueurs d'ondes λ1 et λ2 émises par ces diodes, ainsi que la position du cristal est effectué automatiquement, par l'ordinateur PC.

L'ordinateur PC assure donc le pilotage des paramètres des diodes laser et la rotation de la table d'orientation 19 du cristal. De plus, il permet l'acquisition et le traitement, en temps réel, des mesures, notamment pour déterminer la concentration des gaz détectés.

Les mesures de gaz peuvent être faites au coût par coût, ou bien de façon continue pour un gaz ou pour plusieurs gaz, simultanément ou successivement, et éventuellement de façon périodique.

Selon un mode de réalisation de l'invention, les moyens optiques peuvent être reliés à un émetteur-récepteur qui assure une liaison hertzienne avec un émetteur-récepteur relié à l'ordinateur PC.

Selon un autre mode de réalisation, la liaison entre les moyens optiques et l'ordinateur peut se faire au moyen de fibres optiques.

Selon une variante, plusieurs systèmes de l'invention, identiques les uns aux autres, peuvent être connectés en réseau, sur un site unique ou sur plusieurs sites. Dans ce cas, la gestion des sites répartis se fait à partir de l'un des systèmes, ou par un système centralisé.

En pratique, lors de la mise en route du système, il est nécessaire d'effectuer une calibration. Celle-ci consiste à prendre comme référence un gaz connu et à effectuer les mesures avec ce gaz. Les résultats obtenus à partir des mesures de ce gaz connu, permettent d'étalonner le système et éventuellement d'introduire des coefficients correcteurs.

Selon une variante, cette calibration peut être réalisée à l'aide de deux (ou plus) échantillons de gaz étalons ayant des raies d'absorption à chaque extrémité de la fenêtre de fréquences, et placés à demeure dans le système.

Comme on l'aura compris d'après la description qui précède, tous les éléments des moyens optiques du système de l'invention sont de tailles restreintes, l'ensemble du système est donc de taille réduite ; il occupe une surface nettement inférieure au mètre carré, et peut être contenu dans une mallette. Il est par conséquent facilement transportable, ce qui permet de l'utiliser localement (ce qui signifie qu'il est placé directement dans la zone de mélange gazeux à analyser).

Afin de faciliter son utilisation locale, le système peut être alimenté, en électricité par une batterie, référencée 3 sur la figure, qui lui assure une autonomie, pendant une durée d'environ 1 à 5 jours.

Le système peut toutefois être alimenté en électricité par le secteur, dans le cas par exemple d'un système installé à demeure dans un site.

Le système étant utilisé pour des détections « en local », les éléments optiques sont susceptibles d'être salis. Des moyens de nettoiement, manuels ou automatiques, des optiques peuvent être introduits dans le système.

Il est à noter aussi que la sensibilité du système est de l'ordre de 10 ppb (partie par milliard), ce qui signifie qu'un gaz peut être détecté à partir d'une concentration de 10 milliardièmes dans l'atmosphère. La résolution de ce même système est de l'ordre de 100 MHz.

## Revendications

1. Système de détection et de mesure d'un gaz ou de plusieurs gaz constituant un mélange gazeux, comportant :
- des moyens optiques (1) de détermination du spectre d'absorption du gaz à mesurer ;
- des moyens (2) de mémorisation de données relatives à différents gaz et de traitement des informations issues des moyens optiques ; et
- des moyens (3) d'alimentation électrique ;
caractérisé en ce que les moyens optiques sont positionnés dans le milieu gazeux à analyser et qu'ils comportent :
- au moins une première et une seconde diodes laser à cavités accordables (10a, 10b), émettant des faisceaux lumineux ayant, respectivement, une première et une seconde longueurs d'ondes (λ1, λ2) ;
- un prisme (16) mélangeur de faisceaux lumineux ;
- un cristal biréfringent (18) monté sur une table d'orientation (19) et assurant la formation d'un faisceau lumineux infrarouge ayant pour longueur d'onde, la résultante de la différence des première et seconde longueurs d'ondes ; et
- un détecteur de rayonnements infrarouges (23).

2. Système selon la revendication 1, caractérisé en ce que les moyens optiques comportent une cellule multipassage (21) assurant plusieurs passages du faisceau lumineux dans le milieu gazeux à analyser.

3. Système selon l'une quelconque des revendications 1 et 2, caractérisé en ce que les moyens optiques comportent un filtre (20) laissant passer uniquement les rayonnements infrarouges.

4. Système selon l'une quelconque des revendications 1 à 3, caractérisé en ce qu'il comprend des moyens (11a, 11b) de contrôle des paramètres permettant d'obtenir des rayonnements monomodes.

5. Système selon l'une quelconque des revendications 1 à 4, caractérisé en ce que les moyens optiques et les moyens de mémorisation et de traitement sont reliés les uns aux autres par voie hertzienne ou fibres optiques.

6. Système selon l'une quelconque des revendications 1 à 5, caractérisé en ce que les moyens d'alimentation électriques consistent en une batterie.

7. Système selon l'une quelconque des revendications 1 à 6, caractérisé en ce que le cristal biréfringent est un cristal de sélénide de gallium.

8. Système selon l'une quelconque des revendications 1 à 7, caractérisé en ce qu'il comporte des moyens de vérification des fréquences d'accord des diodes, connectés en boucle fermée avec les moyens de traitement (2) et lesdites diodes laser.

9. Système selon l'une quelconque des revendications 1 à 8, caractérisé en ce qu'il est connecté en réseau à un ou plusieurs autres systèmes identiques.
